Europäisches Patentamt

European Patent Office

Office européen des brevets

(11) Publication number: **0 294 903 B1**

# EUROPEAN PATENT SPECIFICATION

(45) Date of publication of patent specification: **29.04.92**   (51) Int. Cl.⁵: **A01B 29/04**, A01B 29/06

(21) Application number: **88201171.1**

(22) Date of filing: **08.06.88**

(54) **A soil cultivating machine comprising a roller.**

(30) Priority: **10.06.87 NL 8701344**

(43) Date of publication of application:
**14.12.88 Bulletin 88/50**

(45) Publication of the grant of the patent:
**29.04.92 Bulletin 92/18**

(84) Designated Contracting States:
**DE FR GB IT NL**

(56) References cited:
**EP-A- 280 399**
**US-A- 2 261 893**
**US-A- 2 300 851**
**US-E- 18 039**

(73) Proprietor: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

Rank Xerox (UK) Business Services
(–/2.18/2.0)

# Description

The invention relates to a soil cultivating implement comprising a roller for compressing and/or crumbling the soil, the cylindrical periphery of which roller includes a substantially helical element and which roller is mounted rotatably in a supporting frame, the implement furthermore being provided with a plurality of rotatable scraper elements arranged behind the centre line of the roller.

Such an implement is known from US-A-2,300,851. This implement has a horizontal cylinder bearing a series of helical grooves about its outer surface. The grooves are cleaned by a horizontal array of petalled wheels which mesh with the grooves in the cylinder, and appear to clean the cylinder by the tips of the petals digging dirt out of the grooves in the cylinder. Rotation of the grooved cylinder forces the petalled wheels to rotate by the effect of the grooves on the tips of the petals.

Depending on the type and nature of the soil whereon the soil cultivating implement is utilized, earth or other materials may adhere to the roller or to the component parts thereof, as a result of which the roller cannot function optimally. It is even possible that an ever increasing amount of earth and/or other materials collects/collect at the periphery of the roller and/or inside of same and, thus, in addition, considerably increases the roller's weight.

The invention has for its object to provide a soil cultivating implement of the kind set forth with means which contribute towards an improved functioning thereof.

To that end, according to the invention, the scraper elements are arranged below the centre line of the roller and reach to between the turns of the helical element whereby they are caused to move by contact therewith and can be adjusted to a position nearer to or more remote from the roller.

Owing to the fact that portions of the scraper elements extend to between the turns of the helical element, earth and other materials can be prevented from collecting there. Since the helical element rotates, the interspaces between the turns move as it were in the lateral direction, which movement can be followed owing to the fact that the scraper elements are designed capable of movement.

Other relevant prior art disclosing means for cleaning working implements comprises US-A-2,261,893, whereby cleaning elements driven by a roller clean the helical grooves of the roller, however, again with the tips of the cleaning elements, while further the former but not prepublished EP-A-0.280.399 (state of the art according to Article 54 (3) and (4)) discloses a soil cultivating implement comprising a roller for compressing and/or crumbling the soil, the cylindrical periphery of which roller includes a substantially helical element and which roller is mounted rotatably in a supporting frame, the implement furthermore being provided with a plurality of rotatable scraper elements arranged behind the centre line of the roller, wherein furthermore the scraper elements are arranged below the centre line of the roller and reach to between the turns of the helical element whereby they are caused to move by contact therewith.

In a partical embodiment of the invention the adjustment of the scraper elements can be effected by fixation in different positions by means of bolts.

In accordance with a further feature of the invention, the scraper elements are provided such that they are located near the soil during operation. As a result thereof, the earth collected by the scraper elements is returned directly to the soil, thereby preventing large clods from sticking together and being dropped and left on the cultivated soil as large lumps.

Preferably, according to the invention, the scraper elements are substantially rotatable in a plane located below the centre line of the roller, which plane, preferably, may be substantially horizontal.

In accordance with a still further feature of the invention, the outwardly extending portions of a scraper element vary somewhat in shape, as a result of which, during operation, they can come into contact with different portions of the helical element, which may reduce possible wear to a minimum and, in addition, result in an improved scraping action.

In accordance with a further feature of the invention, the scraper element is rotatable about a shaft which, seen in rear view, is arranged at a slightly oblique angle with respect to the vertical. This oblique direction corresponds substantially to the direction of the turn of the helical element in the region of the relevant scraper element, so that the scraping action can be effected by means of a plate-shaped element which is directed substantially perpendicularly to the surface to be scraped.

In addition, according to the invention, the scraper elements partly overlap each other, as seen in plan. Hereby, adjacent scraper elements are located in different planes, each of which scraper elements is positioned in a different plane, the said planes being located at an oblique angle to the horizontal direction. It is alternatively possible for the scraper elements to be located in two or three mutually parallel planes, two adjacent scraper elements always being located in a different plane and the planes being substantially horizontal or at a slight rearward slope relative to the direction of operative travel of the soil cultivating implement.

In accordance with a further feature of the invention, each scraper element is connected by means of a spring, the scraper element optionally being afforded by part of a helical spring which has one end connected to the frame of the implement and, by means of its other end, extends to between the turns of the helical element. During operation, the said scraper elements will move, because they are pushed away by the turns of the helical element until they find themselves in the subsequent space between the turns.

In a still further embodiment of the invention, in accordance with a further feature, the scraper elements are connected to a circulating connecting member which extends along the roller and is designed as a chain running over sprockets near the ends of the roller. Hereby, the scraper elements are arranged on the connecting member, preferably with some play, so that they can adjust themselves to the positions of the turns of the helical element. Each scraper element may be provided with a recess for receiving a portion of the helical element.

In order to fasten the scraper elements, according to a further feature of the invention, a frame beam is provided along the roller over its entire length, the scraper elements being connected to said frame beam and said frame beam being capable of pivoting, preferably in the upward direction and/or rearwards, and being kept in its operating position by the action of a spring. In accordance with a feature of the invention, the frame beam is positioned below the centre line of the roller and, preferably during operation, is located near the soil.

In accordance with a still further feature of the invention, the roller is connected to a portion of the frame by means of a parallelogram construction, whereby the scraper elements are connected to that portion of the parallelogram construction that is movable with the roller, so that the location and the position of the scraper elements relative to the roller remains unchanged when the roller moves relative to the further portion of the frame in the vertical direction.

In addition, according to the invention, the soil cultivating element includes a rotary harrow, behind which the roller is arranged. Moreover, in accordance with a further feature of the invention, a seed drill may be present, in which case the roller is positioned between the harrow and the seed drill.

For a better understanding of the invention and to show how the same may be carried into effect, reference will now be made, by way of example, to the accompanying drawings, in which:

Figure 1 is a plan view of a soil cultivating machine provided with a roller in accordance with the invention;

Figure 2 is a side view of the machine according to Figure 1, taken in the direction of the arrow II in Figure 1;

Figure 3 is a partial view taken in the direction of the arrow III in Figure 2;

Figure 4 shows a second embodiment of a roller in accordance with the invention;

Figure 5 shows a third embodiment of a roller in accordance with the invention;

Figure 6 is a partial view taken in the direction of the arrow VI in Figure 5;

Figure 7 shows a fourth embodiment of a roller in accordance with the invention;

Figure 8 is a partial view of a fifth embodiment of a roller in accordance with the invention;

Figures 9, 10, 11 and 12 show alternative scraper elements of a roller in accordance with the invention;

Figure 13 is a view taken in the direction of the arrow XIII in Figure 12;

Figure 14 shows a second embodiment of alternative scraper elements of a roller in accordance with the invention;

Figure 15 shows an embodiment with linearly moving scraper elements of a roller in accordance with the invention, and

Figure 16 is a cross-sectional view taken on the line XVI - XVI in Figure 15.

In the various drawings, which only show the embodiments schematically, corresponding component parts are denoted by the same reference numerals.

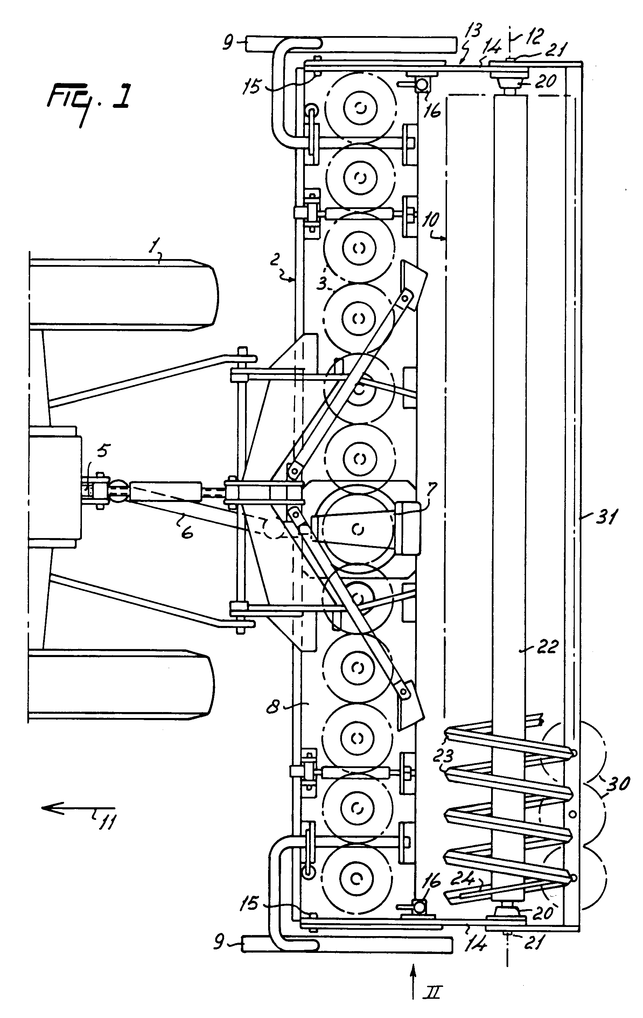

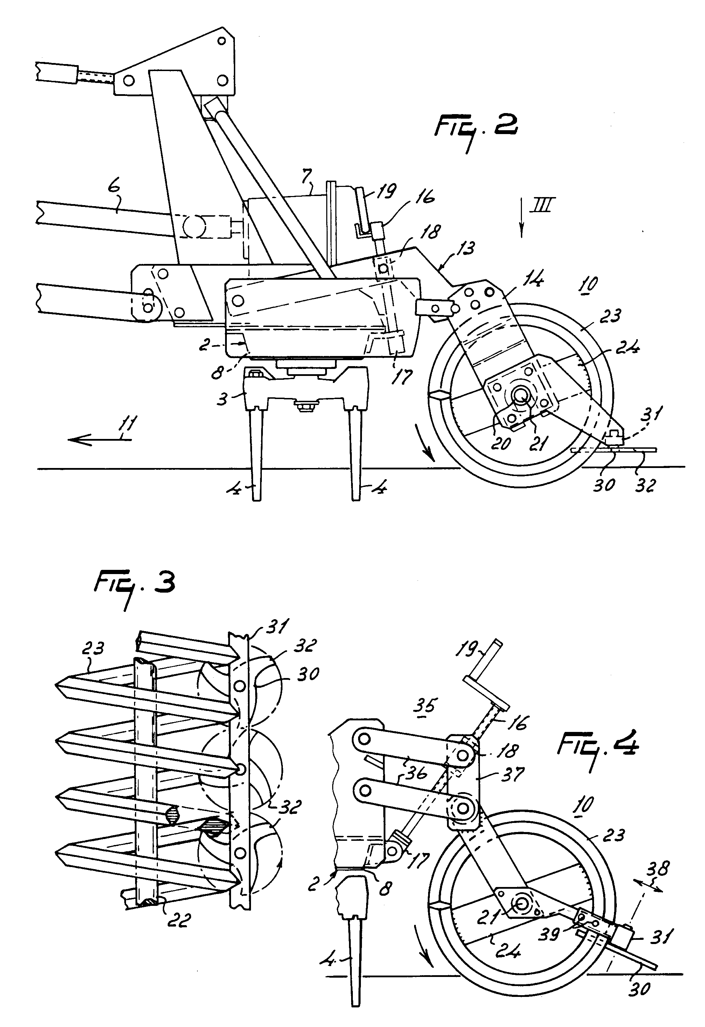

Figure 1 shows the rear side of an agricultural tractor 1, a soil cultivating implement being connected to the three-point lifting hitch. The soil cultivating implement is a rotary harrow 2 having a row of adjacent soil working members 3 which include tines 4 reaching into the soil during operation (Figure 2). The soil working members 3 are driven via the power take-off shaft 5 of the tractor, a drive shaft 6, a gear box 7 and a plurality of gearwheels accommodated in a box-like frame 8. At both ends, the rotary harrow 2 is fitted with a side-plate 9.

A roller 10 is arranged behind the soil working members 3, which roller extends substantially horizontally and transversely to the direction of operative travel as indicated by the arrow 11. The roller 10 is rotatable about its centre line 12 owing to its being bearing-supported in a supporting frame 13. The supporting frame 13 has two arms 14, which arms are disposed at both ends of the box-like frame 8 and are arranged pivotally about a pin 15 (Figures 1 and 2).

The position of the arm 14 relative to the box-like frame 8 can be adjusted by means of a threaded spindle 16, whose end 17 is attached rotatably to the box-like frame 8, whilst the threaded spindle 16 extends through an internally threaded portion 18 connected to the arm 14. It will be obvious that rotation of the threaded spindle 16, which can be effected by means of a handle 19, enables the position of arm 14 to be adjusted, as a result of which the position of the roller 10 relative to the box-like frame 8 is determined.

The arms 14 are connected to the roller 10 via bearings 20, in which a shaft 21 supporting the roller 10 is provided rotatably.

The roller in accordance with the invention includes a coaxial tube 22 which is connected to the shaft 21 and is surrounded by a helical element 23. Via plates 24, the helical element 23 is connected to the tube 22. During operation, the helical element 23 rolls over the soil, whereby it is caused to rotate. It is alternatively possible to drive the roller 10 positively from the power take-off shaft 5 of the tractor.

The helical element 23 may be of a substantially square cross-section, as is shown in the embodiments; however, it is alternatively possible to use a different crosssectional shape, e.g. a round shape. It is also possible to provide the helical element on or near the periphery of a cylinder which constitutes the main part of the roller.

During operation, earth, crop residues etc. may adhere to the various roller components. It is therefore desirable to limit the adherence of earth and said crop residues by using scraper elements which remove same from the roller.

A series of such scraper elements 30 is arranged at the rear side of the roller with respect to the direction of operative travel 11 and near the soil. For that purpose, in the embodiment shown in Figures 1 and 2, there is arranged a frame beam 31 which is connected by means of each of its ends to an arm 14. The frame beam 31 extends along the entire roller and is fitted with the scraper elements 30 which are mounted rotatably thereon.

As is apparent from Figure 3, the scraper elements 30 have portions 32 which extend to between the turns of the helical element 23. It will be obvious that, on rotation of the helical element about its centre line 12, those portions of the helical element 23 that are located near the scraper elements 30 move as it were in the lateral direction, as a result of which the scraper elements 30 are set in motion.

In order to prevent earth clods from collecting near the scraper elements and dropping on the soil as big lumps, in accordance with the invention the scraper elements are arranged near the soil, as is shown e.g. in Figure 2.

The scraper elements may be of various shapes; in accordance with Figure 3, each scraper element is provided with three outwardly extending portions 32 which are in a slightly oblique position relative to the radial direction. Other shapes of such rotatable scraper elements will be described in greater detail hereinafter.

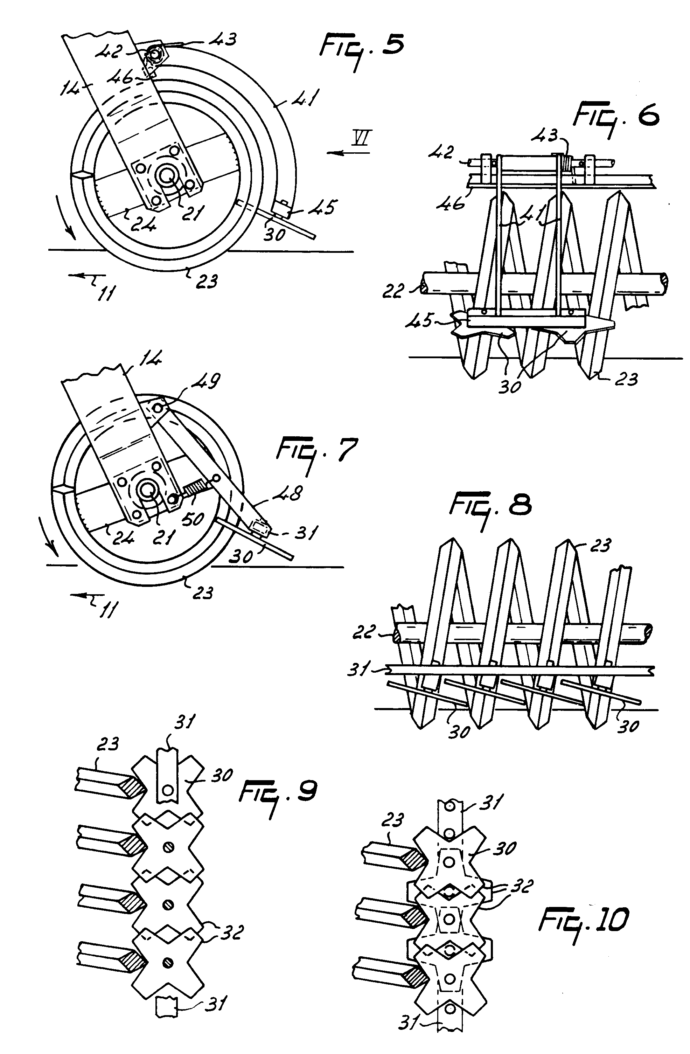

Figure 4 shows an other embodiment of a roller 10 in accordance with the invention, which roller is provided with scraper elements 30. In this embodiment, the connection between the box-like frame 8 and the roller 10 is effected by means of a parallelogram construction 35 having two parallel arms 36, the ends of which at one side are connected pivotably to the box-like frame 8 and at the other side to a frame portion 37 to which the roller 10 is attached. It will be obvious that because of this construction the frame portion 37 will always assume the same angular position relative to the box-like frame 8, so that also the angular position of the scraper elements 30 as well as the position of the scraper elements relative to the roller 10 remains constant. The frame portion 37 is adjustable in height by means of the threaded spindle 16, which can be rotated by means of the handle 19. By moving the roller 10 in the upward direction relative to the box-like frame 8, the working depth of the rotary harrow can be set.

In the embodiment shown in Figure 4, the scraper elements 30 are in a somewhat inclined position, i.e. sloping rearwardly with respect to the direction of operative travel 11. In addition, the frame beam 31, which is only shown in side view, is movable in the direction of the arrow 38, so that the scraper elements 30 can be adjusted to a position nearer to or more remote from the roller 10. This adjustment can be effected by fixation in different positions by means of bolts 39.

Figure 5, too, shows an embodiment wherein the scraper elements 30 are in a slightly rearwardly sloping position with respect to the direction of operative travel 11. Here, the rotatable scraper elements 30 are connected to the arm 14 by means of an arm 41, which is pivotal about a shaft 42. A spring 43 is provided to press the pivotal arm 41 downwards.

In accordance with Figure 6, which is a different view of the embodiment shown in Figure 5, two rotatable scraper elements 30 are arranged on a beam 45, which beam 45 is connected pivotably about shaft 42 by means of two pivotal arms 41. In this manner both one scraper element and also several scraper elements collectively can be provided capable of pivoting. This is effected by fitting same to portions 46 of the supporting frame wherein the roller can rotate, said portions 46 being located above the roller.

Figure 7 shows an embodiment wherein the entire frame beam 31, on which the scraper elements are mounted, can pivot. To that end, the frame beam 31 is connected pivotably about shafts 49 to the arm 14 by means of arms 48. A spring 50 ensures that, during normal operation, the frame beam 31 cum scraper elements 30 remains in the appropriate position and only deflects under the action of larger forces, such as e.g. those exerted by stones or similar objects.

In the embodiment of Figure 8, the frame beam 31 is provided with a plurality of scraper elements 30 which are arranged somewhat obliquely in the lateral direction. This oblique position approximately corresponds to the direction of that portion of the helical element 23 that is located near the relevant scraper element 30. In this embodiment, the scraper elements 30 overlap each other, i.e. they are positioned partly one above the other. This renders it possible to narrow the mutual spacing between the scraper elements to less than the diameter of the path described by the tips of the scraper elements.

Because of the oblique positioning of the scraper elements, it is possible for a portion of the scraper elements to contact the soil, which may result in a positive (crumbling) action.

In the embodiments shown, the relative spacing of the various scraper elements always approximately corresponds to the pitch of the turns of the helical element 23. However, this is not a requirement; in general, it may be said that the smaller the relative spacing between the scraper elements, the more intensive their action is.

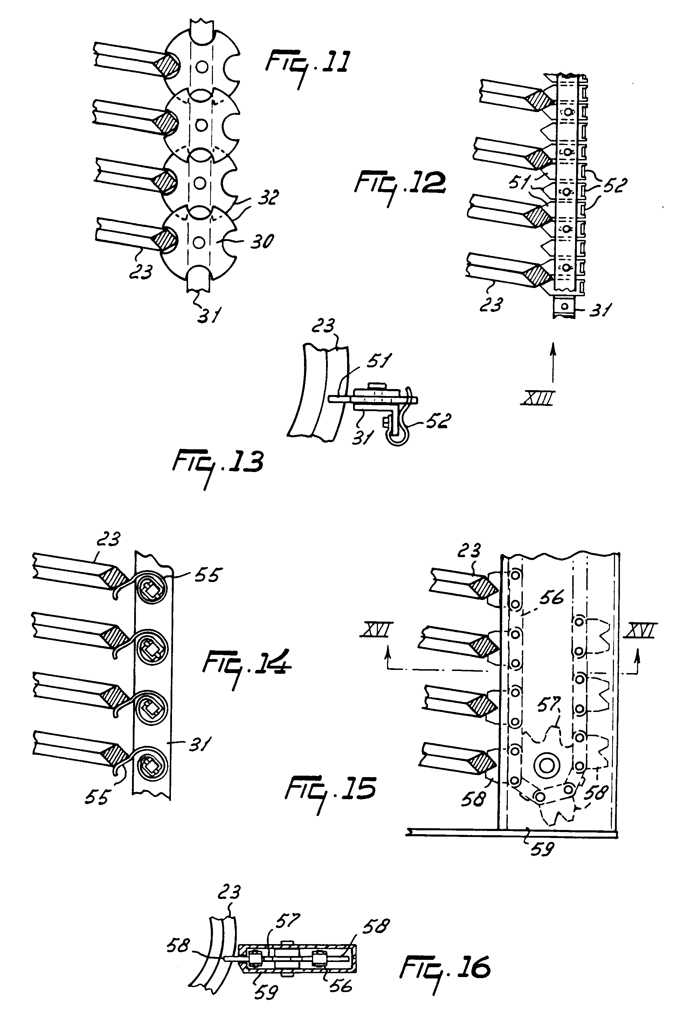

Figures 9, 10 and 11 show alternative embodiments of the scraper elements and their arrangement. The rotatable scraper elements overlap each other, adjacent scraper elements 30 being located in different planes. In Figures 9 and 11, the scraper elements 30 are located in two parallel planes, i.e. arranged alternately. In the embodiment of Figure 10, the scraper elements are arranged in three superjacent planes, i.e. in such an alternation that each of always three adjacent scraper elements is located in a different plane.

In Figures 9 and 10, the scraper elements consist of plate-shaped elements having four radially outwardly extending portions 32, which outwardly extending portions slightly taper in the outward direction. The embodiment of Figure 11 shows scraper elements 30 having outwardly extending portions 32 of increasing dimension in the outward direction. Thus, it is possible for the outwardly extending portions 32 to reach more effectively between the turns of the helical element 23, whereby it is even possible for said outwardly extending portions 32 to reach to beyond said turns, i.e. to near the inner surfaces of the helical element 23.

In accordance with the embodiment as shown in Figure 12, there are provided scraper elements 51 which extend to between the turns of helical element 23 and can be pushed rearwardly by said helical element 23. For that purpose, each scraper element 51 is provided with a leaf spring 52 (Figure 13). The scraper elements 51 are arranged slidably in the frame beam 31 in a manner as is shown in Figure 13.

Figure 14 shows an embodiment wherein a plurality of spring elements 55 are fitted on the frame beam 31, which spring elements 55 can bear against the turns of the helical element by means of their free ends. Part of the spring elements 55 constitutes a scraper element. On rotation of the helical element 23, the turns shift in such a manner that the spring element 55 is tightened until it is released and comes to bear against the subsequent turn.

A further embodiment in accordance with the invention is shown in Figures 15 and 16, wherein the implement comprises an endless carrier 56 in the form of a chain passing over two sprockets 57, one of which is shown. On the links of the chain 56, there are provided scraper elements 58, each having a recess for receiving a portion of the helical element 23. Preferably, the scraper elements 58 are arranged with some play relative to said chain, so that they can adjust themselves somewhat to the positions of the turns of the helical element 23. The chain 56 is accommodated in a hollow frame beam 59, wherein, near the ends, the two sprockets 57 are arranged. The frame beam 59 extends behind the helical element 23 through substantially the entire width of the implement.

**Claims**

1. A soil cultivating implement comprising a roller (10) for compressing and/or crumbling the soil, the cylindrical periphery of which roller includes a substantially helical element (23) and which roller is mounted rotatably in a supporting frame, the implement furthermore being provided with a plurality of rotatable scraper elements (30, 51, 55, 58) arranged behind and below the centre line of the roller (10), reaching to between the turns of the helical element whereby they are caused to move by contact therewith and adjustable to a position nearer to or more remote from the roller (10).

2. An implement as claimed in claim 1, characterized in that the adjustment can be effected by fixations in different positions by means of bolts (39).

3. An implement as claimed in claim 1 or 2, characterized in that the scraper elements (30, 51, 55, 58) are provided such that they are located near the soil during operation.

4. An implement as claimed in any one of claims 1, 2 or 3, characterized in that the scraper elements (30) are rotatable in a plane located below the centre line (12) of the roller (10).

5. An implement as claimed in claim 4, characterized in that the plane is substantially horizontal.

6. An implement as claimed in any one of the preceding claims, characterized in that the scraper elements (30) are disc-shaped and have outwardly extending portions.

7. An implement as claimed in any one of the preceding claims, characterized in that the scraper element (30) is rotatable about an axis which, seen in rear view, is positioned somewhat obliquely with respect to the vertical, whereby the oblique position of the scraper element (30) substantially corresponds to the direction of the turn of the helical element (23) in the region where said helical element (23) contacts the scraper element (30), as seen from the rear.

8. An implement as claimed in any one of the preceding claims, characterized in that, seen in plan view, the scraper elements (30) partly overlap each other.

9. An implement as claimed in claim 1, characterized in that each scraper element (51, 55) is connected by means of a spring.

10. An implement as claimed in claim 9, characterized in that the scraper element is afforded by part of a coiled spring (55) which has one end connected to the frame of the implement and, by means of its other end, extends to between the turns of the helical element (23).

11. An implement as claimed in claim 9, characterized in that the scraper elements (51) are spring-fitted relative to the roller (10), whilst each scraper element is capable of movement towards the roller (10) and away therefrom, it being possible for the scraper elements (51) to be pushed into the direction of the turns of the helical element (23).

12. An implement as claimed in claim 1, characterized in that the scraper elements (58) are fitted to a circulating connecting member which extends along the roller (10).

13. An implement as claimed in claim 12, characterized in that the connecting member is afforded by a chain (56) running over sprockets (57) near the ends of the roller (10).

14. An implement as claimed in claim 12 or 13, characterized in that the scraper elements (58) are arranged movably on the connecting member (56), and that each scraper element (58) is provided with a recess for receiving a portion of the helical element (23).

15. An implement as claimed in any one of the preceding claims, characterized in that the scraper elements (30, 51, 55) are disposed on a frame beam (31) extending along the roller (10) over the entire length thereof.

16. An implement as claimed in claim 15, characterized in that the frame beam (31) is spring-supported, so that it can be moved upwardly and/or rearwardly by a force exerted thereon.

17. An implement as claimed in claim 15 or 16, characterized in that the frame beam (31) is positioned below the centre line (12) of the roller (10).

18. An implement as claimed in claim 17, characterized in that the frame beam (31) is arranged such that it is located near the soil during operation.

19. An implement as claimed in any one of the preceding claims, characterized in that the roller (10) is disposed to the rear of a row of soil working members (3) and is adjustable in height relative to a portion (8) of the frame of the implement.

20. An implement as claimed in claim 19, characterized in that the position of the scraper elements (30, 51, 55, 58) relative to the roller (10) remains unchanged in the differently adjusted positions of the roller (10).

21. An implement as claimed in claim 20, characterized in that the roller (10) is connected to a portion (8) of the frame of the implement by means of a parallelogram construction (35), whereby the scraper elements (30) are connected to that portion of the parallelogram construction (35) that is movable with the roller (10).

**Revendications**

1. Machine pour cultiver le sol comprenant un rouleau (10) pour comprimer et/ou émietter la terre, la périphérie cylindrique dudit rouleau comportant un élément (23) généralement hélicoïdal, ledit rouleau étant monté rotatif dans un châssis de support, la machine étant munie en outre d'une pluralité d'éléments râcleurs rotatifs (30, 51, 55, 58) disposés derrière et sous l'axe du rouleau (10), s'étendant jusqu'entre les spires de l'élément hélicoïdal, ce qui fait qu'ils sont mis en mouvement par contact avec celui-ci, et sont réglables en une position plus proche ou plus éloignée du rouleau (10).

2. Machine selon la revendication 1, caractérisée en ce que le réglage peut s'effectuer par des fixations en différentes positions au moyen de boulons (39).

3. Machine selon la revendication 1 ou 2, caractérisée en ce que les éléments râcleurs (30, 51, 55, 58), sont prévus de telle manière qu'ils sont situés près du sol pendant le travail.

4. Machine selon l'une quelconque des revendications 1, 2 ou 3, caractérisée en ce que les éléments râcleurs (30) sont rotatifs dans un plan situé sous l'axe (12) du rouleau (10).

5. Machine selon la revendication 4, caractérisée en ce que le plan est sensiblement horizontal.

6. Machine selon l'une quelconque des revendications précédentes, caractérisée en ce que les éléments râcleurs (30) ont la forme de disques et ont des parties s'étendant vers l'extérieur.

7. Machine selon l'une quelconque des revendications précédentes, caractérisée en ce que l'élément râcleur (30) est rotatif autour d'un axe qui est disposé, en étant vu de l'arrière, légèrement en oblique par rapport à la verticale, ce qui fait que la position oblique de l'élément râcleur (30) correspond à la direction de la spire de l'élément hélicoïdal (23) dans la région où ledit élément hélicoïdal (23) est au contact de l'élément râcleur (30), tel qu'étant vu de l'arrière.

8. Machine selon l'une quelconque des revendications précédentes, caractérisée en ce que, en étant vus en plan, les éléments râcleurs (30) se chevauchent partiellement entre eux.

9. Machine selon la revendication 1, caractérisée en ce que chaque élément râcleur (51, 55) est relié au moyen d'un ressort.

10. Machine selon la revendication 9, caractérisée en ce que l'élément râcleur est constitué par une partie d'un ressort spiral (55) dont une extrémité est reliée au châssis de la machine, tandis qu'il s'étend, par son autre extrémité, jusqu'entre les spires de l'élément hélicoïdal (23).

11. Machine selon la revendication 9, caractérisée en ce que les éléments râcleurs (51) sont montés élastiquement par rapport au rouleau (10), tandis que chaque élément râcleur peut se mouvoir vers le rouleau (10) ou s'en éloigner, en étant possible pour les éléments râcleurs (51) d'être poussés en direction des spires de l'élément hélicoïdal (23).

12. Machine selon la revendication 1, caractérisée en ce que les éléments râcleurs (58) sont montés sur un organe de connexion circulant qui s'étend le long du rouleau (10).

13. Machine selon la revendication 12, caractérisée en ce que l'organe de connexion est constitué par une chaîne (56) circulant sur des pignons de chaîne (57) près des extrémités du rouleau (10).

14. Machine selon la revendication 12 ou 13, caractérisée en ce que les éléments râcleurs (58) sont disposés mobiles sur l'organe de connexion (56), et en ce que chaque élément râcleur (58) est pourvu d'un creux pour recevoir une partie de l'élément hélicoïdal (23).

15. Machine selon l'une quelconque des revendications précédentes, caractérisée en ce que les éléments râcleurs (30, 51, 55) sont disposés sur une poutre (31) du châssis, s'étendant le long du rouleau (10) sur toute la longueur de celui-ci.

16. Machine selon la revendication 15, caractérisée en ce que la poutre (31) du châssis est supportée élastiquement, de telle sorte qu'elle puisse être entraînée vers le haut et/ou vers l'arrière par une force exercée sur elle.

17. Machine selon la revendication 15 ou 16, caractérisée en ce que la poutre (31) du châssis est disposée sous l'axe (12) du rouleau (10).

**18.** Machine selon la revendication 17, caractérisée en ce que la poutre (31) du châssis est disposée de telle manière qu'elle soit située près du sol pendant le travail.

**19.** Machine selon l'une quelconque des revendications précédentes, caractérisée en ce que Le rouleau (10) est disposé à l'arrière d'une rangée d'organes de travail du sol (3) et est réglable en hauteur par rapport à une partie (8) du châssis de la machine.

**20.** Machine selon la revendication 19, caractérisée en ce que la position des éléments râcleurs (30, 51, 55, 58) par rapport au rouleau (10) reste inchangée dans les différentes positions de réglage du rouleau (10).

**21.** Machine selon la revendication 20, caractérisée en ce que le rouleau (10) est relié à une partie (8) du châssis de la machine au moyen d'une structure en parallèlogramme (35), tandis que les éléments râcleurs (30) sont reliés à la partie de la structure en parallèlogramme (35) qui est mobile avec le rouleau (10).

**Patentansprüche**

**1.** Bodenbearbeitungsgerät mit einer zum Verfestigen und/oder Krümeln des Bodens bestimmten Walze (10), deren zylindrischer Umfang ein im wesentlichen wendelförmiges Element (23) aufweist, und die drehbar in einem Tragrahmen angeordnet ist, sowie mit mehreren drehbaren Abstreiferelementen (30, 51, 55, 58), die hinter der Walzenachse und tiefer als sie angeordnet sind und bis zwischen die Windungen des wendelförmigen Elementes reichen, wobei sie durch Kontakt mit den Windungen in Bewegung versetzt werden und in eine Position näher oder mit größerem Abstand zu der Walze (10) einstellbar sind.

**2.** Gerät nach Anspruch 1, dadurch gekennzeichnet, daß die Einstellung durch Feststellen in verschiedenen Positionen mittels Bolzen (39) durchzuführen ist.

**3.** Gerät nach Anspruch 1 oder 2, dadurch gekennzeichnet, daß die Abstreiferelemente (30, 51, 55, 58) derart vorgesehen sind, daß sie sich im Betrieb nahe dem Boden befinden.

**4.** Gerät nach Anspruch 1, 2 oder 3, dadurch gekennzeichnet, daß die Abstreiferelemente (30) in einer unterhalb der Achse (12) der Walze (10) liegenden Ebene drehbar sind.

**5.** Gerät nach Anspruch 4, dadurch gekennzeichnet, daß die Ebene im wesentlichen horizontal liegt.

**6.** Gerät nach einem der vorhergehenden Ansprüche, dadurch gekennzeichnet, daß die Abstreiferelemente (30) scheibenförmig sind und nach außen gerichtete Teile aufweisen.

**7.** Gerät nach einem der vorhergehenden Ansprüche, dadurch gekennzeichnet, daß das Abstreiferelement (30) um eine Achse drehbar ist, die, in Ansicht von hinten, etwas schräg zur Vertikalen angeordnet ist, wobei die Schräglage des Abstreiferelementes (30) im wesentlichen der Windungsrichtung des wendelförmigen Elementes (23) in dem Bereich entspricht, in dem das wendelförmige Element (23), in Ansicht von hinten, das Abstreiferelement (30) berührt.

**8.** Gerät nach einem der vorhergehenden Ansprüche, dadurch gekennzeichnet, daß die Abstreiferelemente (30) in Draufsicht einander teilweise überlappen.

**9.** Gerät nach Anspruch 1, dadurch gekennzeichnet, daß jedes Abstreiferelement (51, 55) mittels einer Feder angebracht ist.

**10.** Gerät nach Anspruch 9, dadurch gekennzeichnet, daß das Abstreiferelement durch einen Teil einer Spiralfeder (55) gebildet ist, deren eines Ende mit dem Gerätegestell verbunden ist und die sich mit ihrem anderen Ende bis zwischen die Windungen des gewendelten Elementes (23) erstreckt.

**11.** Gerät nach Anspruch 9, dadurch gekennzeichnet, daß die Abstreiferelemente (51) relativ zu der Walze (10) federnd angebracht sind, wobei jedes Abstreiferelement in Richtung auf die Walze (10) und von ihr weg beweglich ist und die Abstreiferelemente (51) in Richtung der Windungen des wendelförmigen Elementes (23) zu stoßen sind.

**12.** Gerät nach Anspruch 1, dadurch gekennzeichnet, daß die Abstreiferelemente (58) an einem umlaufenden Verbindungsglied befestigt sind, das sich an der Walze (10) entlang erstreckt.

**13.** Gerät nach Anspruch 12, dadruch gekennzeichnet, daß das Verbindungsglied durch eine Kette (56) gebildet ist, die nahe den Enden der Walze (10) über Kettenräder (57) läuft.

**14.** Gerät nach Anspruch 12 oder 13, dadurch gekennzeichnet, daß die Abstreiferelemente (58) an dem Verbindungsglied (56) beweglich angeordnet sind, und daß jedes Abstreiferelement (58) eine Ausnehmung zur Aufnahme eines Teiles des wendelförmigen Elementes (23) aufweist.

**15.** Gerät nach einem der vorhergehenden Ansprüche, dadurch gekennzeichnet, daß die Abstreiferelemente (30, 51, 55) an einem Rahmenbalken (31) angeordnet sind, der sich an der Walze (10) entlang über deren ganze Länge erstreckt.

**16.** Gerät nach Anspruch 15, dadurch gekennzeichnet, daß der Rahmenbalken (31) federnd abgestützt ist, so daß er durch eine auf ihn wirkende Kraft aufwärts und/oder rückwärts zu bewegen ist.

**17.** Gerät nach Anspruch 15 oder 16, dadurch gekennzeichnet, daß der Rahmenbalken (31) niedriger angeordnet ist als die Achse (12) der Walze (10).

**18.** Gerät nach Anspruch 17, dadurch gekennzeichnet, daß der Rahmenbalken (31) derart angeordnet ist, daß er sich während des Betriebes nahe dem Boden befindet.

**19.** Gerät nach einem der vorhergehenden Ansprüche, dadurch gekennzeichnet, daß die Walze (10) hinter einer Reihe von Bodenbearbeitungsgliedern (3) angeordnet und relativ zu einem Teil (8) des Gerätegestelles höheneinstellbar ist.

**20.** Gerät nach Anspruch 19, dadurch gekennzeichnet, daß die Lage der Abstreiferelemente (30, 51, 55, 58) in bezug auf die Walze (10) in deren verschiedenen eingestellten Lagen unverändert bleibt.

**21.** Gerät nach Anspruch 20, dadurch gekennzeichnet, daß die Walze (10) mit einem Teil (8) des Gerätegestelles mittels einer Parallelogrammkonstruktion (35) verbunden ist, wobei die Abstreiferelemente (30) mit demjenigen Teil der Parallelogrammkonstruktion (35) verbunden sind, der zusammen mit der Walze (10) bewegbar ist.

EP 0 294 903 B1

FIG. 1

FIG. 2

FIG. 3

FIG. 4

11

EP 0 294 903 B1

FIG. 5

FIG. 6

FIG. 7

FIG. 8

FIG. 9

FIG. 10

12

EP 0 294 903 B1

FIG.11

FIG.12

32

30

23

31

23

51

52

31

XIII

23

51

52

31

FIG.13

23

55

FIG.14

31

55

23

56

XVI

XVI

57

58

58

59

FIG.15

23

57

58

58

FIG.16

59

56

13